# EUROPÄISCHE PATENTSCHRIFT

(11) **EP 2 657 312 B1**
(45) Veröffentlichungstag und Bekanntmachung des Hinweises auf die Patenterteilung: **17.06.2015**
(21) Anmeldenummer: 13165701.7
(22) Anmeldetag: 29.04.2013
(51) Int. Cl.: C09J 7/02

(54) **KLEBEBANDVERBUND**
ADHESIVE TAPE COMPOSITE
BANDE ADHÉSIVE COMPOSITE

(30) Priorität: 29.04.2012 DE 102012008422
(43) Veröffentlichungstag der Anmeldung: 30.10.2013
(73) Patentinhaber: Biologische Insel Lothar Moll GmbH & Co. KG, 68723 Schwetzingen (DE)
(72) Erfinder: Wittig, Arnold, 68723 Schwetzingen (DE)
(74) Vertreter: Thews, Karl

(56) Entgegenhaltungen:
- DE-A1- 10 135 799
- DE-U- 1 899 395

## Beschreibung

Die Notwendigkeit an die Luftdichtheit von Gebäuden ist vor allem durch die Energieeinsparverordnung geregelt. Diese und weitere bauaufsichtlich eingeführten Normen regeln Grenzwerte für den Grad der Undichtheiten und geben Empfehlungen für die Ausführung der Luftdichtungsmaßnahmen. Nicht nur die Luftdichtheit von Dachstühlen, sondern auch die von Holzhäusern, beispielsweise aus Fertigbauteilen, kann nach dieser Norm im Bereich von Wand-, Decken- und Bodenplattenanschlüssen mit Klebebändern erreicht werden.

Die Erfindung betrifft die Verklebung von Bauteilen mit Klebebandstreifen mit zumindest einer Lage eines diffusionsoffenen Trägers und mindestens einer auf dem Träger aufgebrachten Klebstoffschicht. Der Träger kann je nach Anwendungsfall ein- oder mehrlagig ausgebildet sein. Als Träger kommen verschiedenste Kombinationen von Papier, Vlies und Folien in Verbindung mit einer Membrane in Betracht, die für Wasserdampf diffusionsoffen sind. Vlies, Papier und Folien können zusätzlich mit einem Kunststoffgelege oder Ähnlichem armiert sein. Sie dienen der Erhöhung der Reißfestigkeit des Klebebandes, verbessern die Handhabung beim Verlegen und können als Haftgrund für einen Putz dienen. Die Membrane ist nur mehrere Hundertstel Millimeter dick und ist in den Verbund kaschiert.

Nach der DE 103 37 879 B4 ist ein selbstklebendes Band bekannt, das zum Verschließen von Fugen, insbesondere von Ecken und Kanten dient. Das Klebeband weist einen Träger an der Bandoberseite und eine Haftkleberbeschichtung an der Unterseite mit einer abziehbaren Abdeckfolie an der Unterseite auf. Entlang einer Mittelachse sind zwei Faltabschnitte vorgesehen, durch die die Träger aufeinander geklappt werden und die Haftkleberbeschichtung teilweise mit der Abdeckfolie die Außenseite bildet. Die aufeinander geklappten Teile bilden seitliche Flügel.

In der DE 87 15 121 U1 ist ein Klebeband zum Verbinden von Bauteilen beschrieben, das eine Sollbiegestelle in Längsrichtung aufweist, entlang derer das Klebeband in zwei Teile geknickt ist. Nur einer der beiden abgeknickten Teile ist mit einer Schutzfolie abgedeckt.

Nach der DE 100 31 213 B4 ist ein Dichtungsband zum luftdichten Abdichten von Fugen zwischen einem Bauelement und einem verputzten Mauerwerk bekannt, das aus einem Träger, aus einer auf diesem einseitig aufgebrachten Klebeschicht und aus einer auf der Klebeschicht aufgebrachten, abziehbaren Deckfolie besteht. Die Deckfolie weist in Längsrichtung mindestens einen Schlitz auf.

In der DE 1 899 395 U wird eine dreischenklige Vorrichtung zum Abdichten von Zwischenräumen zwischen dem Bade- und Duschwannenrand und den anliegenden Wänden beschrieben. Es ist vorgesehen, einen der drei Schenkel an der Wand zu verkleben.

Der Erfindung liegt die Aufgabe zugrunde, ein handelsübliches diffusionsoffenes Klebeband für den Baubereich in Bezug auf mehrere zueinander abzudichtende Holzbaukörper derart zu konfektionieren, dass das Klebeband einfach und präzise an die relative Geometrie der Körper zueinander angepasst werden kann und gleichzeitig eine verbesserte Abdichtung von Rissen in den Holzbaukörpern erreicht wird.

Gelöst wird die Aufgabe durch einen Klebebandverbund zum luftdichten Anschließen und Abdichten von zwei Holzbauteilen bestehend aus zumindest zwei zusammengeklebten Klebebandstreifen mit jeweils zumindest einer Lage eines diffusionsoffenen Trägers und mindestens einer auf den Träger aufgebrachten Klebstoffschicht. Der Klebebandverbund weist eine dreischenklige Querschnittsform auf, wobei die Querschnittsform durch drei, einen ersten, einen zweiten und einen dritten, sich in radialer Richtung zu einer Mittelachse erstreckende Flügel des Klebebandverbundes gebildet ist, die sich zumindest in der Mittelachse vereinen. Dabei ist jeder Flügel durch einen Trägerabschnitt des Trägers mit einer auf jedem Trägerabschnitt aufgebrachten Klebstoffschicht gebildet, wobei in Bezug auf eine um die Mittelachse umlaufende Richtung U die Klebstoffschicht von dem ersten Flügel hinter dem Trägerabschnitt und die Klebstoffschichten von dem zweiten und dritten Flügel vor dem jeweiligen Trägerabschnitt angeordnet sind.

Durch das teilweise Aufeinanderkleben wird diese dreischenklige Gestaltung erreicht, mit der die Geometrie der Seitenkante eines ersten Bauteils erfasst und dieses Bauteil gleichzeitig auf den beiden an die Seitenkante anschließenden Flächen abgedichtet werden kann. Der zweite und dritte Flügel passen sich an die Geometrie eines zweiten an das erste Bauteil angrenzenden Bauteils an und dichten die beiden Bauteile zueinander ab.

Insbesondere bei Bauteilen wie Wand-, Boden- und Deckenkonstruktionen aus Brettsperrholz oder Brettschichtholz, bei denen die einzelnen unterschiedlichen Brettlagen kreuzweise angeordnet sind, ist das erfindungsgemäße Klebeband vorteilhaft. Mit ihm können nicht nur die beiden rechtwinklig zueinander angeordneten Innenflächen der Bauteile, sondern gleichzeitig auch die auf der Innenfläche vorhandenen Hirnholzrisse im Sockel- oder Decken- oder Endbereich abgedichtet werden. Bei Bauteilen wie Wandelementen werden die äußeren Brettlagen meist senkrecht zur Boden- oder Deckenplatte angeordnet. In der obersten Brettlage kommt es durch Schwinden und Quellen des Holzes zu Rissen, die im Wesentlichen in einer Richtung rechtwinklig zur Boden- oder Deckenplatte verlaufen und die sich in das Bauteil hinein durch die gesamte Brettlage erstrecken. Durch das Klebeband wird die zur Boden- oder Deckenplatte hin gerichtete Hirnholzseite der obersten Brettlage in ihrer gesamten Breite überdeckt, wobei der jeweilige Flügel des Klebebandes dann zwischen dem Bauteil und der Boden- oder Deckenplatte angeordnet ist und die beiden anderen Flügel zum Abdichten der Fuge zwischen dem Bauteil und der Boden- oder Deckenplatte dienen.

Besonders vorteilhaft ist, dass der Klebebandverbund ein System aus einseitig mit einer Klebstoffschicht beschichteten Trägern ist, die jeweils aus dem vorkonfektionierten Klebebandstreifen gebildet sind. Der Klebebandverbund lässt sich mit konventionellen Klebebändern herstellen.

Für die Herstellung ist es vorteilhaft, dass der erste Flügel doppellagig aus zwei an ihren Trägerabschnitten teilweise zusammengeklebten Trägern gebildet ist, wobei die beiden Flügel durch die beiden über den doppellagigen Flügel überstehenden Bereiche der Klebebandstreifen gebildet sind. Dadurch wird erreicht, dass das Klebeband aus zwei konventionellen Klebebändern durch entsprechendes Aufeinanderkleben hergestellt werden kann.

Je nach Größe des Klebebandes ist vorgesehen, dass der Trägerabschnitt bandförmig und eben ausgebildet ist, zwei gegenüberliegende Seitenflächen mit einer Breite zwischen 50 mm und 300 mm aufweist, wobei die Klebstoffschicht über die gesamte Breite der Seitenfläche oder nur über einen Teil der Breite oder mehrere Klebstoffschichten nebeneinander nur über einen Teil der Breite der Seitenfläche aufgebracht sind. Wesentlich ist eine für die Abdichtung funktionale Klebezone, die bei einem Flügel ausreichend breit sein muss, um einen Riss in der obersten Brettlage auf der Hirnholzseite zu überdecken. Die Klebezone muss jedoch nicht zwingend über die gesamte Breite der Seitenflächen oder des Flügels erreicht werden. Ein streifenförmiger Teilauftrag von Klebstoff kann durchaus ausreichend sein.

Eine Schutzfolie auf die Klebstoffschicht aufzubringen, kann für das Montageverfahren sehr vorteilhaft sein, weil nach dem Verkleben des ersten und zweiten Flügels zunächst das Bauteil ausgerichtet und befestigt werden muss. Dabei wäre ein klebriger Bereich des Klebebandes störend.

Hinsichtlich der Montage des Klebebandverbundes in Verbindung mit den beiden abzudichtenden Bauteilen ist es vorteilhaft, dass der Klebebandverbund derart vorkonfektioniert ist, dass der erste und der dritte Flügel entlang ihrer in Richtung der Mittelachse verlaufenden Außenseiten zumindest teilweise über eine Fixierung lösbar miteinander verbunden sind. Dadurch wird erreicht, dass nach dem Ankleben des ersten und zweiten Flügels der dritte Flügel nicht herunterhängt, weil er noch am ersten Flügel fixiert ist.

Diese Maßnahme ist insbesondere bei einem Verfahren zum Abdichten von zwei Bauteilen mit zumindest teilweise rechtwinklig zueinander angeordneten Flächen vorteilhaft, das die folgenden Verfahrensschritte aufweist.
a) Das erste Bauteil wird entlang einer Seitenkante auf den beiden an die Seitenkante angrenzenden Flächen mit dem ersten und zweiten Flügel oder mit zwei Trägerabschnitten des ersten Trägers bzw. mit dem Klebebandstreifen derart verklebt, dass die Mittelachse parallel zur Seitenkante verläuft und der erste und der zweite Flügel zumindest teilweise auf den beiden Flächen kleben. Dadurch wird auf der Hirnholzseite die komplette erste Brettlage überdeckt und auf der Innenseite der Anschluss zum Abdichten mit dem nächsten Bauteil vorbereitet.
b) Danach wird das erste Bauteil mit der mit dem zweiten Flügel beklebten Fläche mittel- oder unmittelbar auf das zweite Bauteil aufgesetzt und ausgerichtet. Hierbei ist die vorstehend beschriebene Fixierung des dritten Flügels vorteilhaft, weil dieser beim Aufsetzen und Ausrichten nicht zwischen den beiden Bauteilen eingeklemmt wird und den Blick in die Fuge zwischen den beiden Bauteilen frei lässt.
c1) Danach wird entweder der dritte Flügel entlang der Mittelachse und/oder entlang der Seitenkante auf dem zweiten Bauteil verklebt oder
c2) der zweite Klebebandstreifen parallel zu der Mittelachse teilweise auf den ersten Klebebandstreifen aufgeklebt. Der somit gebildete dritte Flügel, der über den doppellagigen Klebebereich des ersten Flügels übersteht, wird entlang der Mittelachse und/oder entlang der Seitenkante auf dem zweiten Bauteil verklebt.

Ein weiterer optionaler Verfahrensschritt sieht vor, nach dem Aufsetzen auf das zweite Bauteil zunächst die Fuge zwischen dem ersten Bauteil und dem zweiten Bauteil mit einem Baustoff zu füllen. Dieser Baustoff dient auch als Trägersubstanz. Zum Befüllen ist die Fixierung des dritten Flügels auch vorteilhaft, weil beim Einbringen des Baustoffs von einer Seite des Bauelements erkennbar ist, wann ausreichend Baustoff in der Fuge ist und dieser auf der anderen Seite des Bauteils aus der Fuge herausquillt.

Nach dem Befüllen mit Baustoff wird die Fixierung zwischen dem ersten Flügel und dem dritten Flügel gelöst und der dritte Flügel um die Mittelachse vom ersten Flügel weggeklappt und danach der dritte Flügel auf dem zweiten Bauteil verklebt. Die beiden Bauteile sind somit erfindungsgemäß abgedichtet.

Weitere Vorteile und Einzelheiten der Erfindung sind in den Patentansprüchen und in der Beschreibung erläutert und in den Figuren dargestellt. Es zeigt:
- Figur 1a: eine Prinzipskizze einer Schnittansicht der drei Flügel in einer Ebene E gemäß Fig. 1b mit einem ersten und einem zweiten Bauteil;
- Figur 1b: eine Ansicht gemäß Fig. 1a um 90° gedreht;
- Figur 2: eine Seitenansicht eines Klebebandes mit einem einteiligen Träger;
- Figur 3a: eine Prinzipskizze eines Aufbaus mit zwei Trägern in Form von zwei Klebebändern;
- Figur 3b: zwei zusammengeklebte Klebebänder gemäß Fig. 3a mit zwei Trägern;
- Figur 4: eine perspektivische Ansicht eines Klebebandes mit zwei Trägern;
- Figur 5: eine Prinzipskizze der dreiteiligen Flügelform mit einer Fixierung;
- Figur 6a: ein Klebeband gemäß Fig. 5 nach einem ersten Montageschritt an zwei Bauteilen;
- Figur 6b: die Verwendung gemäß Fig. 6a nach einem weiteren Montageschritt;
- Figur 7: eine Seitenansicht eines Trägers mit einer Membrane, einer Schutzfolie und zwei reißfesten Schichten.

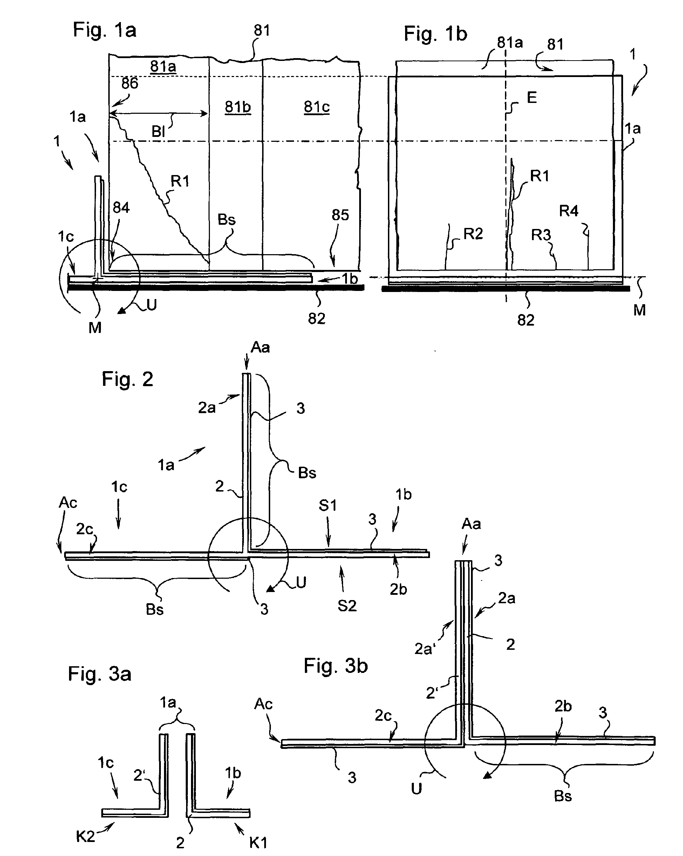

In den Fig. 1 bis 6b sind Klebebandverbunde 1 mit drei Flügeln 1a, 1b, 1c dargestellt, wobei sich die Flügel 1a, 1b, 1c radial zu einer Mittelachse M erstrecken.

Der Klebebandverbund 1 ist grundsätzlich aus einem ein- oder mehrlagigen Träger 2 und einer auf den Träger 2 aufgebrachten Klebstoffschicht 3 aufgebaut.

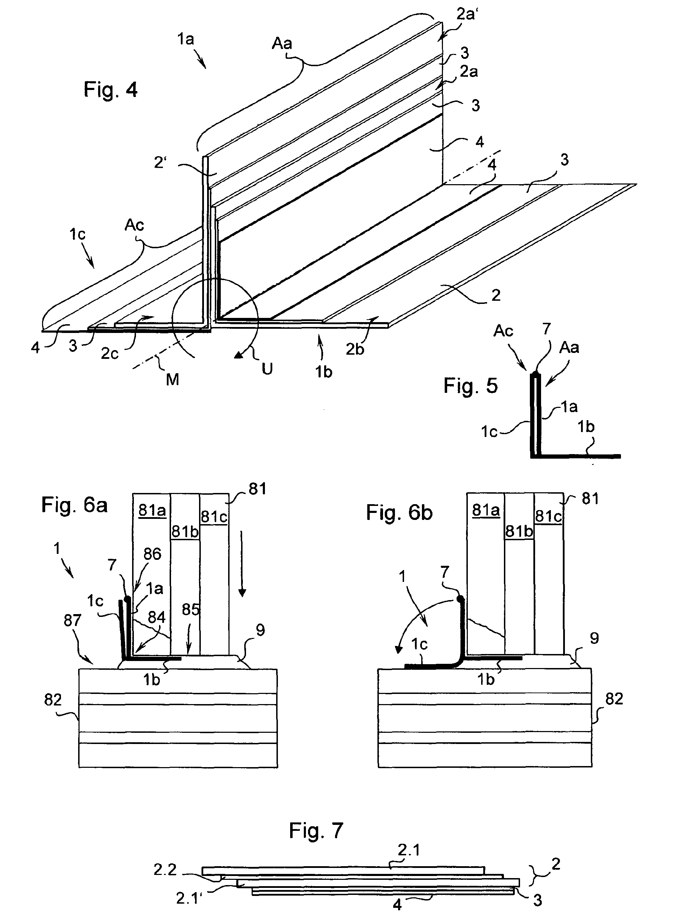

In Fig. 7 ist ein beispielhafter mehrschichtiger Aufbau eines Trägers 2 dargestellt. Zwischen zwei reißfesten Schichten 2.1, 2.1' ist eine wasserdampfvariable Membrane 2.2 angeordnet. Die Klebstoffschicht 3 auf der unteren Schicht 2.1' ist mit einer Schutzfolie 4 abgedeckt, die für die Montage abgezogen wird.

Der Klebebandverbund 1 weist drei Flügel 1a, 1b und 1c auf. Der erste Flügel 1a wird durch einen Teil des Trägers 2, nämlich einen Trägerabschnitt 2a gebildet. Ebenso sind die beiden weiteren Flügel 1b, 1c jeweils durch einen Trägerabschnitt 2b, 2c als Teilbereich des Trägers 2 gebildet.

Ein spezielles Ausführungsbeispiel ist in den Fig. 3a bis 4 dargestellt, bei dem der Klebebandverbund 1 mit zwei Trägern 2, 2' aufgebaut ist. Diese zwei Träger 2, 2' sind wie in Fig. 3a näher dargestellt einseitig mit einer Klebstoffschicht 3 beschichtet und entlang der Mittelachse M teilweise aufeinander geklebt. Durch die aufeinander geklebten Bereiche wird der erste Flügel 1a aufgebaut. Die beiden über diesen geklebten doppellagigen Bereich überstehenden Bereiche bilden den zweiten Flügel 1b und den dritten Flügel 1c. Die mit einer Klebstoffschicht 3 versehenen Träger 2, 2' bilden Klebebandstreifen K1, K2, welche als solche vorkonfektioniert sind.

Bei beiden Ausführungsbeispielen wechseln sich die Klebstoffschichten 3 in einer Umfangsrichtung U um die Mittelachse M in besonderer Weise ab. Nach den hier dargestellten Ansichten ist die Klebstoffschicht 3 des ersten Flügels 1a in der angegebenen Richtung im Uhrzeigersinn hinter dem Trägerabschnitt 2a und die Klebstoffschichten 3 des zweiten und dritten Flügels 1b, 1c vor dem jeweiligen Trägerabschnitt 2b, 2c angeordnet. Es versteht sich von selbst, dass bei einer Betrachtungsweise in entgegengesetzter Richtung zur Mittelachse M diese Reihenfolge umgekehrt ist.

Diese besondere dreiteilige Form ermöglicht es, zwei Bauteile 81, 82 auf besondere Weise zu verkleben und abzudichten.

In Fig. 1 ist dargestellt, dass der erste Flügel 1a und der zweite Flügel 1b des Klebebandverbundes 1 an dem ersten Bauteil 81 aus Holz befestigt sind. Das erste Bauteil 81 ist im Schnitt entlang einer Ebene E (Fig. 1b) dargestellt und auf ein zweites Bauteil 82 aufgesetzt. Das erste Bauteil 81 ist aus drei Holzlagen 81a, 81b, 81c aufgebaut, wobei die Maserungen der drei Holzlagen 81a, 81b, 81c wie bei Sperrholz jeweils versetzt um 90° ausgerichtet sind. Eine Fläche 85 ist gleichzeitig die Hirnholzseite der Holzlage 81a.

Das erste Bauteil 81 weist zwei an einer Seitenkante 84 angrenzende Flächen 85, 86 auf, an denen der Klebebandverbund 1 festgeklebt ist. Die Holzlage 81a, die die Seitenkante 84 bildet, weist einen rechtwinklig zur Fläche 85 verlaufenden Riss R1 auf, der über die gesamte Breite Bl der Holzlage 81a von der Fläche 86 bis zur Fläche 85 verläuft. Der Riss R1 verbindet also die Fuge zwischen den beiden Bauteilen 81, 82 mit dem an die Fläche 86 angrenzenden Innenraum eines Gebäudes.

Dadurch, dass der Klebebandverbund 1 zwischen den beiden Bauteilen 81, 82 an der Fläche 85 am ersten Bauteil 81 verklebt ist, ist der Riss R1 von unten, d. h. von der Fläche 85 her abgedichtet. Somit kann kein Luftaustausch durch die Fuge zwischen den beiden Bauteilen 81, 82 und dem an der Fläche 86 angrenzenden Innenraum stattfinden.

Ein solcher Riss R1, wie er in Fig. 1b in der Draufsicht auf die Fläche 86 dargestellt ist, kann bei Fertigbauteilen für Häuser mehrere Millimeter breit und mehrere Zentimeter tief sein, sodass die gesamte Holzlage 81a über ihre Breite Bl durchtrennt ist und enorme Luftmassen durchströmen. Kleinere Risse R2-R4 sind dahingegen unproblematisch.

Dieser erfindungsgemäße Vorteil des Klebebandverbundes 1 kann jedoch nur dann erreicht werden, wenn die Breite Bs des Flügels 1b größer als die Breite Bl der Holzlage 81a ist.

In den Fig. 4 bis 6b ist eine weitere Besonderheit dargestellt, die das Montageverfahren unterstützt. In vorkonfektioniertem Zustand sind die beiden Flügel 1a, 1c entlang der beiden Außenseiten Aa, Ac der beiden Flügel 1a, 1c über eine Fixierung 7 miteinander lösbar verbunden. Eine solche Fixierung 7 ist beispielsweise aus einem Klebstoff gebildet.

Nach dem Verkleben des Klebebandverbundes 1 mit den beiden Flügeln 1a, 1b an dem ersten Bauteil 81 ist der dritte Flügel 1c noch fixiert. Dadurch lässt sich der Klebebandverbund 1 einfacher am ersten Bauteil 81 anbringen. Zudem lässt sich das erste Bauteil 81 beim Aufsetzen auf das zweite Bauteil 82 von beiden Seiten justieren, weil der dritte Flügel 1c nicht den Einblick in die zwischen den beiden Bauteilen 81, 82 gebildete Fuge versperrt oder zwischen den beiden Bauteilen 81, 82 einklemmt. Nach dem Ausrichten des ersten Bauteils 81 wird der dritte Flügel 1c gegebenenfalls nach dem Einbringen eines Baustoffs 9 in die Fuge vom ersten Flügel 1a abgelöst und auf das zweite Bauteil 82 aufgeklebt.

## Patentansprüche

1. Klebebandverbund (1) zum luftdichten Anschließen und Abdichten von zwei Holzbauteilen (81, 82), bestehend aus
a) zumindest zwei zusammengeklebten Klebebandstreifen (K1, K2) mit jeweils zumindest einer Lage eines diffusionsoffenen Trägers (2) und mindestens einer auf den Träger (2) aufgebrachten Klebstoffschicht (3),
**gekennzeichnet durch**
b) eine dreischenklige Querschnittsform, wobei die Querschnittsform **durch** drei, einen ersten, einen zweiten und einen dritten, sich in radialer Richtung zu einer Mittelachse (M) erstreckende Flügel (1a, 1b, 1c) des Klebebandverbundes (1) gebildet ist, die sich zumindest in der Mittelachse (M) vereinen;
c) jeder Flügel (1a, 1b, 1c) ist **durch** einen Trägerabschnitt (2a, 2b, 2c) des Trägers (2) mit einer auf jedem Trägerabschnitt (2a, 2b, 2c) aufgebrachten Klebstoffschicht (3) gebildet,
d) wobei in Bezug auf eine um die Mittelachse (M) umlaufende Richtung (U) die Klebstoffschicht (3) von dem ersten Flügel (1a) hinter dem Trägerabschnitt (2a) und die Klebstoffschichten (3) von dem zweiten und dritten Flügel (1b, 1c) vor dem jeweiligen Trägerabschnitt (2b, 2c) angeordnet sind.

2. Klebebandverbund (1) nach Anspruch 1, **dadurch gekennzeichnet, dass** die einseitig mit einer Klebstoffschicht (3) beschichteten Träger (2, 2') jeweils aus dem vorkonfektionierten Klebebandstreifen (K1, K2) gebildet sind.

3. Klebebandverbund (1) nach Anspruch 1 oder 2, **dadurch gekennzeichnet, dass** der erste Flügel (1a) doppellagig aus zwei an ihren Trägerabschnitten (2a, 2a') teilweise zusammengeklebten Trägern (2, 2') gebildet ist, wobei die beiden Flügel (1b, 1c) durch die beiden über den doppellagigen Flügel (1a) überstehenden Bereiche der Klebebandstreifen (K1, K2) gebildet sind.

4. Klebebandverbund (1) nach Anspruch 3, **dadurch gekennzeichnet, dass** der Trägerabschnitt (2a, 2a', 2b, 2c) bandförmig und eben ausgebildet ist, zwei gegenüberliegende Seitenflächen (S1, S2) mit einer Breite (Bs) zwischen 50 mm und 300 mm aufweist, wobei
a) die Klebstoffschicht (3) über die gesamte Breite (Bs) der Seitenfläche (S1) oder nur über einen Teil der Breite (Bs) oder
b) mehrere Klebstoffschichten (3) nebeneinander nur über einen Teil der Breite (Bs) der Seitenfläche (S1) aufgebracht sind.

5. Klebebandverbund (1) nach einem der vorstehenden Ansprüche, **dadurch gekennzeichnet, dass** zumindest teilweise auf die Klebstoffschicht (3) eine Schutzfolie (4) aufgebracht ist.

6. Klebebandverbund (1) nach einem der vorstehenden Ansprüche, **dadurch gekennzeichnet, dass** der Klebebandverbund (1) derart vorkonfektioniert ist, dass der erste und der dritte Flügel (1a, 1c) entlang ihrer in Richtung der Mittelachse (M) verlaufenden Außenseiten (Aa, Ac) zumindest teilweise über eine Fixierung (7) lösbar miteinander verbunden sind.

7. Verfahren zum Abdichten von zwei Bauteilen (81, 82) mit zumindest teilweise rechtwinklig zueinander angeordneten Flächen (85, 86, 87), mit dem Klebebandverbund gemäß einem der vorstehenden Ansprüche, bei dem
a) das erste Bauteil (81) entlang einer Seitenkante (84) auf den beiden an die Seitenkante (84) angrenzenden Flächen (85, 86) mit dem ersten und zweiten Flügel (1a, 1b) oder mit dem Klebebandstreifen (K1) derart verklebt wird, dass die Mittelachse (M) parallel zur Seitenkante (84) verläuft und der erste und der zweite Flügel (1a, 1b) zumindest teilweise auf den beiden Flächen (85, 86) kleben,
b) danach das erste Bauteil (81) mit der mit dem zweiten Flügel (1b) beklebten Fläche (85) mittel- oder unmittelbar auf das zweite Bauteil (82) aufgesetzt und ausgerichtet wird und danach entweder
c1) der dritte Flügel (1c) entlang der Mittelachse (M) und/oder entlang der Seitenkante (84) auf dem zweiten Bauteil (82) verklebt wird oder
c2) der zweite Klebebandstreifen (K2) parallel zu der Mittelachse (M) teilweise auf den ersten Klebebandstreifen (K1) aufgeklebt wird und dadurch der doppellagige erste Flügel (1a) und der dritte Flügel (1c) gebildet werden und der dritte Flügel (1c), der über den doppellagigen Klebebereich übersteht, entlang der Mittelachse (M) und/oder entlang der Seitenkante (84) auf dem zweiten Bauteil (82) verklebt wird.

8. Verfahren nach Anspruch 7, **dadurch gekennzeichnet, dass** nach dem Aufsetzen auf das zweite Bauteil (82) zunächst die Fuge zwischen dem ersten Bauteil (81) und dem zweiten Bauteil (82) mit einem Baustoff (9) gefüllt wird.

9. Verfahren nach Anspruch 7 oder 8, **dadurch gekennzeichnet, dass** unmittelbar vor oder nach dem Befüllen mit Baustoff (9) die Fixierung (7) zwischen dem ersten Flügel (1a) und dem dritten Flügel (1c) gelöst und der dritte Flügel (1c) um die Mittelachse (M) vom ersten Flügel (1a) weggeklappt und danach der dritte Flügel (1c) auf dem zweiten Bauteil (82) verklebt wird.

## Claims

1. An adhesive tape assembly (1) for connecting and sealing two wooden components (81, 82) in an air-tight manner, consisting of
a) at least two adhesive tape strips (K1, K2) which are affixed to one another and which each comprise at least one layer of a permeable carrier (2) and at least one adhesive layer (3) applied to the carrier (2), **characterized by**
b) a three-limbed cross-sectional shape, wherein the cross-sectional shape is formed by three, one first, one second and one third, wings (1a, 1b, 1c) of the adhesive tape assembly (1) which extend in the radial direction relative to a central axis (M) and which unite at least in the central axis (M);
c) each wing (1a, 1b, 1c) is formed by a carrier section (2a, 2b, 2c) of the carrier (2) with an adhesive layer (3) applied to each carrier section (2a, 2b, 2c),
d) wherein, in relation to a direction (U) running around the central axis (M), the adhesive layer (3) of the first wing (1a) is arranged behind the carrier section (2a) and the adhesive layers (3) of the second and third wings (1b, 1c) are arranged in front of the respective carrier section (2b, 2c).

2. The adhesive tape assembly (1) according to claim 1, **characterized in that** the carriers (2, 2'), which are coated on one side with an adhesive layer (3), are each formed from the prefabricated adhesive tape strips (K1, K2).

3. The adhesive tape assembly (1) according to claim 1 or 2, **characterized in that** the first wing (1a) is formed in a two-layered manner from two carriers (2, 2') which are partially affixed to one another at their carrier sections (2a, 2a'), the two wings (1b, 1c) being formed by the two regions of the adhesive tape strips (K1, K2) that project beyond the two-layered wing (1a).

4. The adhesive tape assembly (1) according to claim 3, **characterized in that** the carrier section (2a, 2a', 2b, 2c) is strip-shaped and flat and has two opposite side faces (S1, S2) with a width (Bs) of between 50 mm and 300 mm, wherein
a) the adhesive layer (3) is applied over the entire width (Bs) of the side face (S1) or only over a portion of the width (Bs) or
b) a plurality of adhesive layers (3) are applied next to one another only over a portion of the width (Bs) of the side face (S1).

5. The adhesive tape assembly (1) according to one of the preceding claims, **characterized in that** a protective film (4) is applied to at least part of the adhesive layer (3).

6. The adhesive tape assembly (1) according to one of the preceding claims, **characterized in that** the adhesive tape assembly (1) is prefabricated such that the first and the third wing (1a, 1c) are detachably connected to one another at least partially, via a fixing (7), along their outer sides (Aa, Ac) running in the direction of the central axis (M).

7. A method for sealing two components (81, 82) having surfaces (85, 86, 87) arranged at least partially at right angles to one another, using the adhesive tape assembly according to one of the preceding claims, in which
a) the first component (81), along a side edge (84), on the two surfaces (85, 86) adjoining the side edge (84), is affixed to the first and second wings (1a, 1b) or to the adhesive tape strip (K1) in such a way that the central axis (M) runs parallel to the side edge (84) and the first and the second wing (1a, 1b) adhere at least partially to the two surfaces (85, 86),
b) then the first component (81) is placed with the surface (85) affixed to the second wing (1b) indirectly or directly onto the second component (82) and is oriented and then either
c1) the third wing (1c) is affixed to the second component (82) along the central axis (M) and/or along the side edge (84) or
c2) the second adhesive tape strip (K2) is partially affixed to the first adhesive tape strip (K1) parallel to the central axis (M) and as a result the two-layered first wing (1a) and the third wing (1c) are formed and the third wing (1c), which projects beyond the two-layered affixing region, is affixed to the second component (82) along the central axis (M) and/or along the side edge (84).

8. The method according to claim 7, **characterized in that**, after placing onto the second component (82), first the join between the first component (81) and the second component (82) is filled with a building material (9).

9. The method according to claim 7 or 8, **characterized in that**, immediately before or after the filling with building material (9), the fixing (7) between the first wing (1a) and the third wing (1c) is released and the third wing (1c) is folded away from the first wing (1a) about the central axis (M) and then the third wing (1c) is affixed to the second component (82).

## Revendications

1. Composite de ruban adhésif (1) pour le raccordement étanche à l'air et l'étanchement de deux éléments de construction en bois (81, 82), composé de
a) au moins deux bandes de ruban adhésif (K1, K2) avec respectivement au moins une nappe d'un support (2) ouvert à la diffusion et au moins une couche de colle (3) appliquée sur le support (2),
**caractérisé par**
b) une forme de section transversale à trois branches, la forme de section transversale étant formée par trois ailes (1a, 1b, 1c) du composite de ruban adhésif (1), à savoir une première, une deuxième et une troisième aile, s'étendant dans la direction radiale par rapport à un axe médian (M), qui se réunissent au moins dans l'axe médian (M) ;
c) chaque aile (1a, 1b, 1c) est formée par un tronçon de support (2a, 2b, 2c) du support (2) avec une couche de colle (3) appliquée sur chaque tronçon de support (2a, 2b, 2c),
d) la couche de colle (3) de la première aile (1a) étant, par rapport à une direction (U) tournant autour de l'axe médian (M), disposée derrière le tronçon de support (2a), et les couches de colle (3) de la deuxième et de la troisième aile (1b, 1c) étant, par rapport à une direction (U) tournant autour de l'axe médian (M), disposées devant le tronçon de support (2b, 2c) respectif.

2. Composite de ruban adhésif (1) selon la revendication 1, **caractérisé en ce que** les supports (2, 2') recouverts d'une couche de colle (3) sur un côté sont formés respectivement de la bande de ruban adhésif (K1, K2) pré-confectionnée.

3. Composite de ruban adhésif (1) selon la revendication 1 ou 2, **caractérisé en ce que** la première aile (1a) est formée en nappe double de deux supports (2, 2') partiellement assemblées par collage au niveau de leurs tronçons de support (2a, 2a'), les deux ailes (1b, 1c) étant formées par les deux zones de bandes de ruban adhésif (K1, K2) qui dépassent de l'aile (1a) en double nappe.

4. Composite de ruban adhésif (1) selon la revendication 3, **caractérisé en ce que** le tronçon de support (2a, 2a', 2b, 2c) est constitué en forme de ruban et de façon plane, présente deux surfaces latérales (S1, S2) opposées ayant une largeur (Bs) entre 50 mm et 300 mm,
a) la couche de colle (3) étant appliquée sur toute la largeur (Bs) de la surface latérale (S1) ou bien uniquement sur une partie de la largeur (Bs), ou
b) plusieurs couches de colle (3) étant appliquées de façon juxtaposée uniquement sur une partie de la largeur (Bs) de la surface latérale (S1).

5. Composite de ruban adhésif (1) selon une des revendications précédentes, **caractérisé en ce qu'**une feuille protectrice (4) est appliquée au moins partiellement sur la couche de colle (3).

6. Composite de ruban adhésif (1) selon une des revendications précédentes, **caractérisé en ce que** le composite de ruban adhésif (1) est pré-confectionné de telle sorte que la première et la troisième aile (1a, 1c) sont raccordées l'une à l'autre de façon détachable au moins partiellement par le biais d'une fixation (7) le long de leurs côtés extérieurs (Aa, Ac) situés le long de l'axe médian (M).

7. Procédé d'étanchement de deux éléments de construction (81, 82) avec des surfaces (85, 86, 87) disposées au moins partiellement à angle droit les unes par rapport aux autres, avec le composite de ruban adhésif selon une des revendications précédentes, dans lequel
a) le premier élément de construction(81) est collé, le long d'un arête latérale (84) sur les deux surfaces (85, 86) adjacentes à l'arête latérale (84), avec la première et la deuxième aile (1a, 1b) ou avec le bande de ruban adhésif (K1) de telle sorte que l'axe médian (M) est parallèle à l'arête latérale (84) et de telle sorte que la première et la deuxième aile (1a, 1b) adhèrent au moins partiellement sur les deux surfaces (85, 86)
b) ensuite le premier élément de construction(81) est, avec la surface (85) collée avec la deuxième aile (1b), placé indirectement ou directement sur le deuxième élément de construction(82) et aligné, et puis soit
c1) la troisième aile (1c) est collée le long de l'axe médian (M) et/ou le long de l'arête latérale (84) sur le deuxième élément de construction(82), soit
c2) la deuxième bande de ruban adhésif (K2) est collée parallèlement à l'axe médian (M) partiellement sur la première bande de ruban adhésif (K1), et de ce fait la première aile (1a) en double nappe et la troisième aile (1c) sont formées, et la troisième aile (1c), qui dépasse de la zone de collage en double nappe, est collée sur le deuxième élément de construction(82) le long de l'axe médian (M) et/ou le long de l'arête latérale (84).

8. Procédé selon la revendication 7, **caractérisé en ce que**, après le placement sur le deuxième élément de construction(82), la rainure entre le premier élément de construction (81) et le deuxième élément de construction (82) est d'abord remplie avec un matériau de construction (9).

9. Procédé selon la revendication 7 ou 8, **caractérisé en ce que**, immédiatement avant ou après le remplissage avec le matériau de construction (9), la fixation (7) est détachée entre la première aile (1a) et la troisième aile (1c), et la troisième aile (1c) est éloignée de la première aile (1a) par rabattement autour de l'axe médian (M) et ensuite la troisième aile (1c) est collée sur le deuxième élément de construction(82).
